# EUROPEAN PATENT APPLICATION

(11) **EP 4 442 397 A1**
(43) Date of publication of application: **09.10.2024**
(21) Application number: 24166792.2
(22) Date of filing: 27.03.2024
(51) Int. Cl.: B23K 7/10, E21B 7/14

(54) **DEVICE AND PROCESS FOR IGNITING OXYGEN THERMAL LANCES OR MELTING LANCES**

(30) Priority: 31.03.2023 IT 202300006375
(71) Applicant: BM Group Holding S.p.A., 38083 Borgo Chiese (TN) (IT)
(72) Inventor: FORELLI, Ruggero, 38083 Borgo Chiese (TN) (IT); RUSU, Ion, 38122 Trento (TN) (IT); TONINI, Andrea, 38089 Storo (TN) (IT); BOTTINI, Mirko, 38083 Borgo Chiese (TN) (IT)
(74) Representative: Cosenza, Simona

(57) **Abstract**

A device and process for igniting oxygen thermal lances or melting lances comprises a cartridge (10) coupled to the operating end of the thermal lance (11) and suppliable (14) by oxygen (17) intended to ignite the lance; the cartridge (10) contains high calorific value material (15) and is associated with a heater assembly (16) adapted to heat the cartridge, in a short time at a high temperature up to cause said material (15) to burn; the lance is then transferred in the operating position where it is supplied by oxygen (17) to the cartridge contacting the burnt material to start the step of igniting the lance.

## Description

The object of the invention is a device and a process for igniting oxygen thermal lances or melting lances.

Another object of the invention is a cartridge and an assembly for igniting oxygen thermal lances or melting lances.

The thermal lance, also known as oxygen lance or melting lance, is a device used in different fields for cutting or drilling a plurality of materials known for having a high melting temperature, from rock to cement or steel.

Once ignited and supplied by oxidizing gas (oxygen), indeed, an exothermic reaction, which brings the cutting end of the lance to a temperature ranging from 3500°C to above 5000°C, is activated.

Different constructing techniques have been implemented over time in the making of lances, both in terms of form and elemental composition of the used materials.

In its most typical form, the thermal lance consists of a steel tube filled by longitudinally-positioned filaments, also made of mild steel.

The diameters, both of the outer tube and the inner filaments, are variable based on the reference process: standard values can have a diameter from 10 to 40 mm for the outer tube and a diameter of 2 mm for the single inner filaments.

The number and the arrangement of the latter depend in turn on the type of process, since the ratio of steel volume and oxygen in the reaction, from which the working temperature and the consumption rate derive, depends on it.

Igniting the lance, and therefore starting the melting exothermic reaction, provides that the end of the lance is heated at a temperature higher than 1000°C and that enough oxygen is flowed to start the reaction.

Patent US 11420295B2 describes a lance comprising the above-mentioned filaments and a cartridge at one end, consisting of a case containing a set of materials referred to as "ignition fuel" (iron wool or similar) and "ignition enhancer" (magnesium or similar). The ignition of the lance suggested by patent US 11420295B2 requires a first ignition of the material through electric arc or similar, and simultaneously the blow of enough oxygen into the lance, so as to ignite the complete combustion of the latter.

Based on the type of lance and the use, the igniting system can be incorporated or external.

The incorporated system provides the ignition through electric arc, due to a short circuit between the two poles defined by the lance and the object to be cut, but it is not always usable, both as a matter of operating conditions, where the object to be cut cannot be physically earthed, and of complexity and therefore costs of the lance itself.

Instead, the external systems consist in using a device separated from the lance, such as for example a welding torch or similar heating system.

Instead, the problem of this technique firstly consists in the need to use external non-automatable devices, and therefore the lance is primarily used by being manually ignited by an operator.

Furthermore, the ignition occurs simultaneously with the lighting itself of the lance, which needs to be positioned immediately in the cutting/drilling point.

The operation is typically performed by two people (a lance operator and an ignition operator), who are at risk of injury due to the amount of liquid steel splashes present once the thermal lance is ignited.

Therefore, the solutions to the drawbacks given by the two above-described techniques (ignition with incorporated and external systems) are to be found in a hybrid system, which automatically allows the remote and safe ignition and in processes where the incorporated igniters are not usable.

Indeed, in the iron and steel field, one of the main subjects is operating safety, not only of the thermal lance with the related igniting system, but, especially, of the operating environment. Therefore, the objective of the most recent safety standards provides that the human intervention in the zones at risk (metal melting) is minimized, if not completely eliminated.

Starting from this prerequisite, the most recent systems for cleaning and opening obstructed nozzles by mean of thermal lances are totally automated regarding handling and moving the thermal lance, providing for a robotic arm or similar handler, with total control of the operation by the operator from a remote-control room.

This means that the entire step of using the thermal lance, from igniting to controlling the oxygen flow to extinguishing, needs to be sufficiently reliable not to require the human intervention for any kind of adjustments or preparations.

Thermal lances described, for example, in publication EP0334009A1, which proposes a cartridge system being self-ignited with friction after opening the oxygen flow, are known.

This ignition can be made due to the use of iron thermite or other similar pyrotechnic material. However, using these materials transforms the thermal lances from inert objects to dangerous objects with possible risk of explosion, requiring a particular accuracy in transport (such as for example air transport wherein typically they are not allowed) and storage, often incompatible with the iron and steel environment.

A partial solution to this drawback is proposed in WO0250396A1, where the pyrotechnic material is replaced by pyrophoric material (such as zircon or titanium), i.e., having the capability of igniting in the presence of enough amount of oxygen.

This solution lowers the risk of flammability given by the previously used substances, but it does not eliminate it completely. Being the zircon dust a pyrophoric substance, it however requires a particular attention, being classified as F (easily flammable) according to the latest standards.

Furthermore, these substances bring other indications of danger, such as for example R15, according to which contacting water can release extremely-flammable gases. This can have an impact on the transport and storage operations, similarly to the system proposed in EP0334009A1, as well as on using and handling, which requires a certain degree of caution.

A further problem of this solution is the dependence on the operating conditions. Indeed, the correct functionality is not ensured, and variations in boundary conditions such as humidity, temperature, or quality of used oxygen lower its reliability, occasionally requiring the human intervention to replace non-working cartridges, which cannot be checked in any manner before being used, if not during the ignition itself of the lance.

Document WO2012030269A1 has the objective of a better efficiency and reliability than the previous ones, having a button system to control the ignition through a pressure. The suggested use is handling the thermal lances through robotic systems.

However, the operating conditions of this system provide contacting and pushing the lance against the object to be cut or drilled. This condition is present in the steps of opening obstructed channels (where there is an obstacle to be drilled, against which the cartridge can be pressed), but is impossible in the cleaning operations typically required in the iron and steel field.

Indeed, in order to clean, it is required that the ignition occurs without any external contact with the cartridge, because there is no material to be drilled against which the cartridge can be pressed. Furthermore, this solution suggests the use of a burning charge inside the cartridge, bringing back to the above problems in terms of transport, storage, and handling safety.

Patent document GB 17605A describes an oxygen lance cutting process and suggests some manual methods for igniting the lance, including, for example, positioning a piece of charcoal already made incandescent between the lance and the material to be cut and starting the oxygen flow.

Starting from the above-mentioned state of the art of the systems for igniting thermal lances, the object of this invention is to propose an innovative process for igniting, having the following features:
- Being automatically performable by a robotic system;
- Not requiring specific transport/storage standards;
- Not having risk of spontaneous ignition/explosion;
- Not requiring external action for the ignition itself such as for example pressure or friction;
- Facilitating the identification of the cutting/drilling point through its light in the step of approaching the operating point being typically used in safe environments;
- Offering greater reliability than the known systems;
- Allowing to ignite the lance without oxygen flow, for a greater process control and a greater handling safety.

For these and further objects which will be better understood below, the invention proposes to make a device for igniting oxygen thermal lances or melting lances according to claim 1, a cartridge according to claim 6, an assembly for igniting oxygen thermal lances or melting lances according to claim 8, and a process for igniting oxygen thermal lances or melting lances according to claim 9.

The invention will be now described in a preferred but nonlimiting embodiment thereof, referring to the attached drawings wherein:
figure 1 illustrates part of the device for igniting according to the invention;
figure 1b illustrates the part of the device for igniting of figure 1 in a sectional view;
figure 2 illustrates the assembly associated with the thermal lance and its device for igniting;
figure 3 is the enlargement of a detail of figure 2.

The device for igniting oxygen thermal lances or melting lances according to the present invention comprises a cartridge 10 and an induction heater assembly 16, adapted to heat the cartridge 10.

According to the invention, a cartridge 10 is inserted on a known-type thermal lance 11. In particular, the cartridge 10 is couplable to the operating end of a thermal lance 11 and suppliable by oxygen 17 intended to ignite the lance.

The cartridge 10 is made of steel, preferably mild steel. Preferably, the cartridge 10 has at a first end a system for being locked on the thermal lance 11, advantageously but not restrictively consisting of a threaded hole 12 to screw the cartridge 10 on a corresponding threaded end 13 of the thermal lance 11.

In other words, the cartridge 10 has a threaded hole 12 in order to be screwable to the operating end of a thermal lance 11.

A second end of the cartridge 10 has one or more holes 14 to allow oxygen to pass. Such holes 14 are preferably axial.

The cartridge 10 contains high calorific value material 15.

In other words, the cartridge 10 is a case.

Inside the cartridge 10, there is a small amount of high calorific value material 15, such as for example carbon or anthracite. The weight of the material 15 depends on the selected granulometry and therefore on the density of the material. High calorific value material means a fossil fuel material. Such material 15 is adapted to be burnt in the induction heating step, before supplying oxygen into the cartridge 10 for igniting the thermal lance 11.

For an easier construction and storage, this material can be inserted both in grains or pellets larger than the hole(s) 14 for passing oxygen (about 4-5 mm), i.e., having an enough large size not to escape from the hole 14, and in the form of a carbon disk, constructed by compressing carbon dust, which thereby does not split and does not fall from the holes 14 of the cartridge 10.

The second solution allows to separately transport the cartridge 10 and the carbon disk, however requiring the latter to be inserted into the cartridge 10 when assembling with the thermal lance 11.

Alternatively, the cartridge 10 can be filled with the high calorific value material 15 in fine mixed grains, previously inserting, at the holes 14 of the cartridge 10, an amount of paper acting as a stopper, so that the material 15 does not escape from the holes 14.

Or still, a bag generally made of plastic, previously filled with the high calorific value material 15 (in any granulometry), can be inserted into the cartridge 10.

This type of cartridge 10 has no spontaneous ignition or fire risk, employing for instance carbon in grains and not in fine dust, widely used in the iron and steel industry.

A second component of the invention is the heater assembly 16, by which the cartridge 10 can be heated, bringing it to a predetermined temperature for instance above 1000°C in a short time (depending on the power of the heater assembly, even in less than 10 seconds), also igniting the high calorific value material 15, typically burning at a temperature higher than 600/700°C.

The heater assembly 16 comprises a generator 18 and a wound spiral 19, configured to be arranged around the cartridge 10. In particular, when the cartridge 10 is accommodated in the spiral 19, it can be heated by induction up to burn the material 15 inside the cartridge 10 itself.

The material 15 present inside the cartridge 10 burns, keeping, in the suggested proportions, the cartridge 10 at the required temperature for at least 60 seconds.

This time period is largely enough to bring the thermal lance to the drilling/cleaning zone, ensuring the correct automatic positioning thereof, and therefore start oxygen 17, which, by meeting the high calorific value material 15 inserted into the cartridge 10, connected in turn to the end of the thermal lance 11, acts as a comburent, promoting the combustion thereof until the cartridge 10 exceeds 1000°C, a temperature at which the exothermic reaction is triggered, resulting in the ignition of the thermal lance. In other words, after a few tens of seconds, generally between 20 and 40 seconds (time generally enough to transfer the lance 11 in the operating position), from the heating of the cartridge 10 to the predetermined temperature (for instance 1000°C), the cartridge 10 could be cooled. However, subsequently supplying oxygen, contacting the burnt material 15, causes an exothermic reaction resulting in the temperature of the cartridge 10 rising above the predetermined temperature (for instance >1000°C) and the thermal lance 11 being ignited.

Therefore, with this system, with respect to the other external igniting methods, the igniting operation can be divided in two steps.

The first one heats the end of the lance 11, without oxygen flow and therefore without actually igniting it (differently from the known systems), allowing it to be safely moved, further preventing the lance from early exhausting. Instead, the second step, performed when the lance 11 is in place, consists in the actual ignition by opening the oxygen flow, which, contacting the heated cartridge 10 and the respective high calorific value material 15 inserted therein, starts the exothermic reaction and the actual ignition of the lance 11.

Advantageously, the cartridge 10 illuminated by itself represents a further safety element, facilitating the automatic guide towards the correct operating point, typically remotely confirmed by an operator with the aid of cameras.

The heater assembly 16 advantageously consists of an induction heater, consisting of the generator 18 and one or more spirals made of copper 19, suitably dimensioned for the cartridge 10 (diameter, length, and coil number).

As known, in an induction forging/heating system, the generator 18 consists of an electronic converter which produces a medium-frequency alternating electric current, which, circulating in the coil(s) 19, induces, through a magnetic field, eddy currents inside the metal object positioned between coils (in this case the cartridge 10), causing it to quickly heat without any contact and in a completely controlled manner without flame.

Therefore, during the heating step, a handler or robotic arm 20 positions the cartridge 10 into the spiral 19 and starts the induction heating cycle, long enough to bring the cartridge 10 to a temperature higher than 1000°C.

Therefore, with respect to the prefixed reference features, with this solution the entire process is automatically controllable. The thermal lance 11, for example, can be handled by a robotic arm 20, having both the object to position the cartridge 10 into the spiral of the inductor, and to move the thermal lance 11 and position it in the igniting point for the operations of cleaning or drilling the casting channel.

The cartridges 10 thus designed do not have pyrotechnic dusts or pyrophoric dusts, freeing them from possible safety problems in terms of transport and storage. Furthermore, there is a remarkable lowering in the costs of the consumable materials, the case being made of steel and grains inside the cartridge 10 of common carbon, differing from the more expensive materials typically employed in systems as those described in the above-mentioned prior art.

The actual igniting step does not require further external action, such as for example pressure of the cartridge 10 or friction.

In particular, the igniting step is performed by oxygen 17 which, contacting the heated cartridge 10 and the combusting material 15 contained therein, starts an exothermic reaction and the ignition of the thermal lance 11.

A process for igniting oxygen thermal lances or melting lances comprising the steps described below forms part of the present invention.

The process according to the present invention comprises a first step of providing a device as described above, with the cartridge 10, adapted to be supplied with oxygen 17 for igniting, coupled to the operating end of a thermal lance 11.

The process comprises an induction heating step which is subsequent to the step of providing the device. The heating step is performed for a predetermined time at a predetermined temperature of the cartridge 10 through the heater assembly 16, until causing the material 15 to burn.

After burning the material 15, the process comprises a step of transferring the thermal lance 11 in the operating position.

The process also comprises a step of supplying oxygen 17 into the cartridge 10 contacting the burnt material, to start the step of igniting the lance 11. Such step of supplying oxygen 17 is performed after transferring the thermal lance 11 in the operating position.

Preferably, in the step of heating the cartridge 10 for a predetermined time at a predetermined temperature, the predetermined temperature is at least equal to 600°C and the predetermined time is at least equal to 5 seconds, preferably between 5 and 10 seconds.

Specifically, the predetermined temperature at which cartridge 10 is heated is equal to or greater than the burning temperature of the high calorific value material 15 contained in cartridge 10.

Preferably, the predetermined temperature is at least equal to 1000 °C.

Preferably, the step of providing a device comprises a sub-step of filling the cartridge 10 with a high calorific value material. With reference to what is reported above about the shape of the high calorific value material 15, such step of filling the cartridge 10 can be performed in a step of making/producing the cartridge 10 or when using the thermal lance 11, in a time just before the heating step.

In accordance with the present invention, the step of supplying oxygen 17 is performed only after burning the material 15. In other words, the step of heating until burning the material 15 is performed without oxygen 17.

Preferably, the step of transferring the thermal lance 11 in the operating position is performed by moving the thermal lance 11 by a robotic arm 20.

A cartridge 10 having a first end adapted to be coupled to an operating end of a thermal lance 10 and a second end having one or more, preferably axial, holes 14 for passing oxygen 17 also forms part of the present invention. The cartridge 10 is filled with a high calorific value material, i.e., a fossil fuel material, such as for example carbon or anthracite.

The cartridge 10 is adapted to be heated by induction. In particular, the cartridge 10 is made of steel, preferably mild steel.

An assembly 200 for igniting oxygen thermal lances or melting lances comprising a device as described above forms finally part of the present invention.

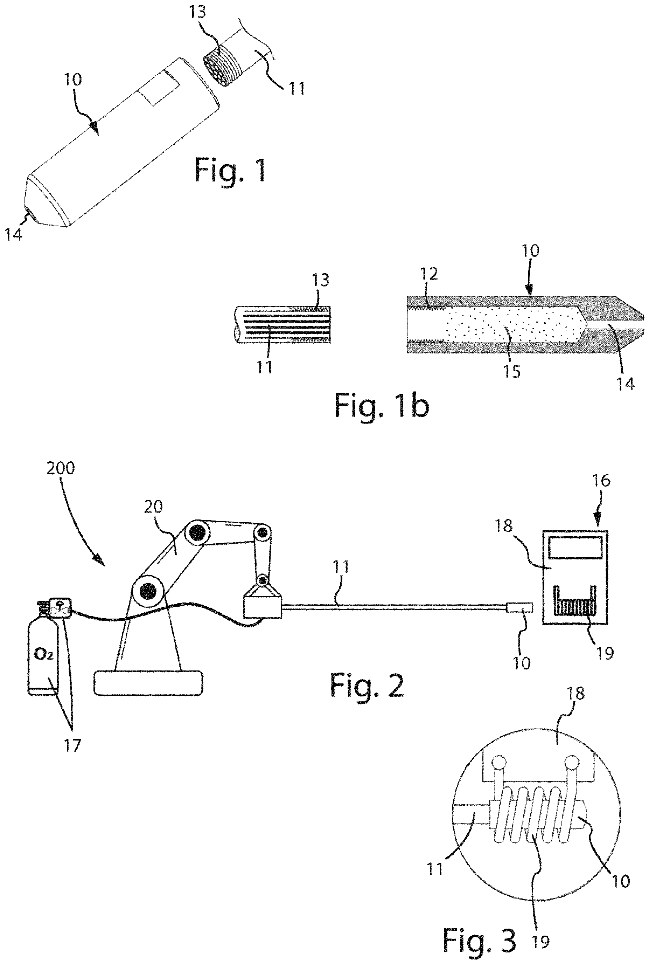

The igniting assembly 200, particularly illustrated in figure 2, comprises, in addition to the cartridge 10 and the heater assembly 16, a thermal lance 11. The thermal lance 11 has an operating end which is coupled to the cartridge 10.

The igniting assembly 200 comprises a robotic arm 20, configured to handle the thermal lance 11. The igniting assembly 200 further comprises a supplier for supplying oxygen 17 placed in fluid communication with the thermal lance 11 and the cartridge 10. The supplier for supplying oxygen 17 is adapted to supply oxygen 17 to the lance and the cartridge 10 for igniting the lance 11.

Finally, with this system there is a remarkable benefit in terms of reliability and repeatability of the process. The ignition is based on the founding principle of the exothermic reaction, or high-temperature steel and enough oxygen flow. Not requiring further triggering reactions, such as for example the pyrophoric reaction between oxygen and zircon dust, the punctual control of the oxygen flow is not a binding parameter for the good ignition, therefore the process is more controlled and with a higher success probability.

## Claims

1. Device for igniting oxygen thermal lances or melting lances, comprising a cartridge (10) couplable to the operating end of a thermal lance (11) and suppliable by oxygen (17) intended to ignite the lance, **characterized in that** the cartridge (10) contains high calorific value material (15); said device comprising an induction heater assembly (16) adapted to heat the cartridge (10), such that said material (15) can be burnt before supplying oxygen into the cartridge (10) for igniting the thermal lance.

2. Device according to claim 1 **characterized in that** the cartridge (10) has at a first end a threaded hole (12) in order to be screwable to the operating end of a thermal lance.

3. Device according to claim 1 or 2, **characterized in that** the high calorific value material (14) is carbon or anthracite.

4. Device according to any of the preceding claims, **characterized in that** the heater assembly (16) comprises a generator (18) and a wound spiral (19) configured to be arranged around the cartridge (10).

5. Device according to any of the preceding claims, wherein said cartridge (10) is made of steel, a second end of the cartridge (10) having one or more axial holes (14) for passing oxygen (17).

6. Cartridge (10) having a first end adapted to be coupled to an operating end of a thermal lance (10) and a second end having one or more axial holes (14) for passing oxygen (17): said cartridge (10) being filled with a high calorific value material and being made of steel.

7. Cartridge (10) according to claim 6, wherein said high calorific value material is a fossil fuel, preferably carbon or anthracite.

8. Assembly (200) for igniting oxygen thermal lances or melting lances comprising a device according to any of claims 1 to 5, said igniting assembly (200) comprises:
- a thermal lance (11), to the operating end of which the cartridge (10) is coupled,
- a robotic arm (20), configured to handle the thermal lance (11),
- an oxygen supplier (17) placed in fluid communication with the thermal lance (11) and the cartridge (10).

9. Process for igniting oxygen thermal lances or melting lances comprising the following steps in succession:
- providing a device according to any of claims 1 to 5, with the cartridge (10) adapted to be supplied with oxygen (17) for igniting, said cartridge (10) being coupled to the operating end of a thermal lance (11);
- heating by induction the cartridge (10) for a predetermined time at a predetermined temperature through said heater assembly (16) up to cause said material (15) to burn;
- transferring the thermal lance (11) in the operating position;
- supplying oxygen (17) in the cartridge (10) contacting the burnt material to start the step of igniting the lance.

10. Process for igniting oxygen thermal lances or melting lances according to claim 9, **characterized in that** in said step of heating the cartridge (10) for a predetermined time at a predetermined temperature, said predetermined temperature is at least equal to 600°C and said predetermined time is at least equal to 5 seconds.

11. Process for igniting oxygen thermal lances or melting lances according to claim 10, wherein said predetermined temperature is at least equal to 1000°C and said predetermined time is between 5 to 10 seconds.

12. Process for igniting oxygen thermal lances or melting lances according to any of claims 9 to 11, **characterized in that** the step of providing a device comprises a sub-step of filling the cartridge (10) with a high calorific value material (15).

13. Process for igniting oxygen thermal lances or melting lances according to any of claims 9 to 12, **characterized in that** the step of supplying oxygen is performed only after burning the material (15).

14. Process for igniting oxygen thermal lances or melting lances according to any of claims 9 to 13, **characterized in that** said step of transferring the thermal lance (11) in the operating position is performed by moving the thermal lance (11) by a robotic arm (20).
